# EUROPEAN PATENT APPLICATION

(11) **EP 3 021 272 A1**
(43) Date of publication of application: **18.05.2016**
(21) Application number: 15194238.0
(22) Date of filing: 12.11.2015
(51) Int. Cl.: G06Q 20/32, G06Q 20/42, G06Q 20/40

(54) **APPARATUS AND METHOD FOR PAYMENT**

(30) Priority: 12.11.2014 KR 20140157486
(71) Applicant: Samsung Electronics Co., Ltd., Gyeonggi-do 16677 (KR)
(72) Inventor: Lee, Yang-Soo, Yongin-si (KR); Chang, Moon-Su, Yongin-si (KR); Lee, Da-Som, Seoul (KR); Jang, Dong-Ho, Hwaseong-si (KR)
(74) Representative: Nederlandsch Octrooibureau

(57) **Abstract**

An electronic device and a method for transmitting authentication information in a mobile payment environment are provided. The electronic device includes a first communication module and a second communication module, the method can include obtaining at least one of first authentication information and second authentication information stored in the electronic device, when the obtained authentication information comprises the first authentication information, transmitting the first authentication information to a first external receiving device of the electronic device through the first communication module, and when the obtained authentication information comprises the second authentication information, transmitting the second authentication information to a second external receiving device through the second communication module.

## Description

### TECHNICAL FIELD

The present disclosure relates to an apparatus and a method for transmitting information using at least one communication module for payment.

### BACKGROUND

As electronic devices such as smart phone or tablet personal computer (PC) spread, the electronic device is evolving from a simple communication medium to a device for various functions such as communications, distribution, Internet, and payment and brings changes to socio-cultural, financial, and distribution fields. Particularly, mobile payment via the electronic device in payment settlement brings about a new change to a payment means which transits from cash to a credit card. A mobile payment service can include a service for online and offline purchases and a service for paying for goods using a mobile device. The electronic device can include a communication function for transmitting payment information to a receiving device.

When the mobile payment service is vitalized in future, the mobile payment service using near field communication (NFC) alone cannot satisfy user's various needs. To meet the user's various needs, the smart phone can add a mobile payment using other communication method than the NFC.

For example, when near field magnetic stripe data transmission is added for the mobile payment service, an interface for other mobile payment system than the NFC-based payment system can be required. In addition, what is needed is a method for acquiring authentication information for payment from at least one secure world between the different payment systems.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and an electronic device for transmitting authentication information using at least one communication module for a mobile payment service.

In accordance with an aspect of the present disclosure, a method and an electronic device are provided. The method and an electronic device includes linking a payment system based on near field magnetic stripe data transmission and a payment system based on near field communication (NFC).

Another aspect of the present disclosure is to provide a method and an electronic device for linking a payment system based on near field magnetic stripe data transmission and a payment system based on near field communication (NFC) in an environment supporting trusted execution environment (TEE) which separates a normal world and a secure world.

In accordance with an aspect of the present disclosure, an electronic device is provided. The electronic device includes a first communication module configured to transmit first authentication information to an external electronic device, a second communication module configured to transmit second authentication information to an external electronic device, at least one secure element module configured to store the first and second authentication information, and a processor configured to determine to transmit at least one of the first authentication information and the second authentication information according to an authentication service transaction, and determine at least one of the first communication module corresponding to the first authentication information and the second communication module corresponding to the second authentication information based on the determination.

In accordance with another aspect of the present disclosure, an operating method of an electronic device is provided. The operating method includes determining to transmit at least one of first authentication information and second authentication information according to an authentication service transaction, the first and second authentication information stored in at least one secure element module, determining at least one of a first communication module corresponding to the first authentication information and a second communication module corresponding to the second authentication information based on the determination, providing corresponding authentication information to the at least one communication module determined, and transmitting the first authentication information through the first communication module or the second authentication information through the second communication module.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an electronic device for supporting a payment system using near field communication (NFC) according to an embodiment of the present disclosure;
FIG. 2 illustrates hardware architecture for providing rich execution environment (REE) and trusted execution environment (TEE) according to an embodiment of the present disclosure;
FIG. 3 illustrates hardware for providing REE and TEE according to an embodiment of the present disclosure;
FIGS. 4A and 4B illustrate hardware for providing REE and TEE according to an embodiment of the present disclosure;
FIG. 5 illustrates an electronic device according to an embodiment of the present disclosure;
FIG. 6 illustrates operations of an electronic device according to an embodiment of the present disclosure;
FIG. 7 illustrates interfacing between components of an electronic device according to an embodiment of the present disclosure;
FIG. 8 illustrates operations of an electronic device including a plurality of communication modules for a mobile payment service according to an embodiment of the present disclosure;
FIG. 9 illustrates interfacing between components of an electronic device according to another embodiment of the present disclosure;
FIG. 10 illustrates operations of an electronic device including a plurality of communication modules for a mobile payment service according to another embodiment of the present disclosure;
FIG. 11 illustrates interfacing between components of an electronic device according to yet another embodiment of the present disclosure;
FIG. 12 illustrates operations of an electronic device including a plurality of communication modules for a mobile payment service according to yet another embodiment of the present disclosure;
FIG. 13 illustrates operations of an electronic device including a plurality of communication modules for a mobile payment service according to yet another embodiment of the present disclosure;
FIG. 14 illustrates interfacing between components of an electronic device according to still another embodiment of the present disclosure;
FIG. 15 illustrates operations of an electronic device including a plurality of communication modules for a mobile payment service according to still another embodiment of the present disclosure;
FIG. 16 illustrates operations of an electronic device including a plurality of communication modules for a mobile payment service according to an embodiment of the present disclosure;
FIG. 17 illustrates interfacing between components of an electronic device according to a further embodiment of the present disclosure;
FIG. 18 illustrates operations of an electronic device including a plurality of communication modules for a mobile payment service according to a further embodiment of the present disclosure;
FIG. 19 illustrates interfacing between components of an electronic device according to a further embodiment of the present disclosure;
FIG. 20 illustrates operations of an electronic device including a plurality of communication modules for a mobile payment service according to a further embodiment of the present disclosure;
FIG. 21 illustrates operations of an electronic device including a plurality of communication modules for a mobile payment service according to a further embodiment of the present disclosure;
FIG. 22 illustrates interfacing between components of an electronic device according to a further embodiment of the present disclosure; and
FIG. 23 illustrates operations of an electronic device including a plurality of communication modules for a mobile payment service according to a further embodiment of the present disclosure.

Throughout the drawings, like reference numerals will be understood to refer to like parts, components and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, a reference to "a component surface" includes a reference to one or more of such surfaces.

By the term "substantially", it is indicated that the recited characteristic, parameter, or value need not be achieved exactly, but that deviations or variations, including for example, tolerances, measurement error, measurement accuracy limitations and other factors known to those skilled in the art, may occur in amounts that do not preclude the effect the characteristic was intended to provide.

The terms such as "include" and/or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

Although terms including ordinal numbers, such as "first" and "second," and the like, may be used to describe various components, such components are not limited by the above terms. The above terms are used only to distinguish one component from another. For example, a first component may be referred to as a second component without departing from the scope of the present disclosure, and likewise a second component may be referred to as a first component. The term of "and/or" encompasses a combination of plural items or any one of the plural items.

In the case according to which a component is referred to as being "connected to" or "accessed by" another component, it should be understood that not only the component is directly connected to or accessed by the other component, but also there may exist another component between them. Meanwhile, in the case according to which a component is referred to as being "directly connected to" or "directly accessed by" another component, it should be understood that there is no component there between.

Unless defined otherwise, all terms used herein have the same meanings as commonly understood by those skilled in the art. Such terms as those defined in a generally used dictionary are to be interpreted to have the meanings equal to the contextual meanings in the relevant field of art, and are not to be interpreted to have ideal or excessively formal meanings unless clearly defined in the present specification.

An electronic device according to an embodiment of the present disclosure can be a device having communication functionality. For example, an electronic device can include at least one of a smartphone, a tablet personal computer (PC), a mobile phone, a video phone, an e-book reader, a desktop PC, a laptop PC, a netbook computer, a personal digital assistant (PDA), a portable multimedia player (PMP), a Moving Picture Experts Group Audio phase 1 or phase 2 (MPEG-1 or MPEG-2) audio Layer 3 (MP3) player, a mobile medical appliance, a camera, and a wearable device (e.g., a head-mounted-device (HMD) such as electronic glasses, an electronic textiles, an electronic bracelet, an electronic necklace, an electronic appcessory, an electronic tattoo, and a smart watch).

An electronic device can be a smart home appliance having communication functionality. The smart home appliance can include, for example, at least one of a television, a digital versatile disk (DVD) player, an audio system, a refrigerator, an air conditioner, a vacuum cleaner, an oven, a microwave oven, a washing machine, an air purifier, a set-top box, a TV box (e.g., Samsung HomeSync™, AppleTV™, or Google TV™), game consoles, an electronic dictionary, a digital key, a camcorder, and a digital frame.

An electronic device can include at least one of various medical appliances (e.g., magnetic resonance angiography (MRA), magnetic resonance imaging (MRI), computed tomography (CT), X-ray system, ultrasonicator)), a navigation device, a global positioning system (GPS) receiver, an event data recorder (EDR), a flight data recorder (FDR), an in-vehicle infotainment device, marine electronic equipment (e.g., marine navigation device and gyro compass), avionics, a security device, a vehicle head unit, an industrial or home robot, an automatic teller's machine (ATM) of a financial company, and a point of sale (POS) of a store.

An electronic device can include at least one of part of furniture or building/structure having communication functionality, an electronic board, an electronic signature receiving device, a projector, and various gauges (e.g., gauges for water, electricity, gas, and radio waves). An electronic device can be one or a combination of those various devices. The electronic device can be a flexible device. Those skilled in the art should understand that an electronic device of the present disclosure is not limited to those devices.

Embodiments of the present disclosure provide an electronic device by referring to the accompanying drawings. The term "user" can indicate a person or a device (e.g., an artificial intelligence electronic device) who or which uses an electronic device.

Various embodiments of the present disclosure provide an interface structure for linking a payment system based on near field magnetic stripe data transmission and a payment system based on near field communication (NFC), and an operating method of an electronic device for transmitting authentication information based on the interface structure in an environment supporting a trusted execution environment (TEE) (e.g., TrustZone of ARM) which separates a normal world and a secure world.

Hereinafter, a first authentication service can indicate an operation for transmitting authentication information for payment to a POS device through a first communication module, and a second authentication service can indicate an operation for transmitting the authentication information for the payment to the POS device through a second communication module. Herein, a transaction of the first authentication service and a transaction of the second authentication service can be conducted at the same time or one at a time.

The first communication module can use, but not limited to, the near field magnetic stripe data transmission, and the second communication module can use, but not limited to, the NFC. The communication modules can use various communication methods. Notably, it is advantageous that the first communication module based on the near field magnetic stripe data transmission has no feedback for the authentication information transmission, and the second communication module based on the NFC has feedback for the authentication information transmission.

The payment system based on the near field magnetic stripe data transmission is similar to a payment system reads the magnetic field generated by swiping a plastic card which records necessary information by applying a magnetic material in a stripe form. The near field magnetic stripe data transmission generates and transmits data as a magnetic field in a device so that the POS device can read the magnetic field generated by swiping the plastic card.

Hereinafter, the authentication information can include payment information for goods or purchase, or authentication data of the payment.

An authentication transaction can indicate a user's operation for, after purchasing goods, paying for the purchase or authenticating the payment using an electronic device.

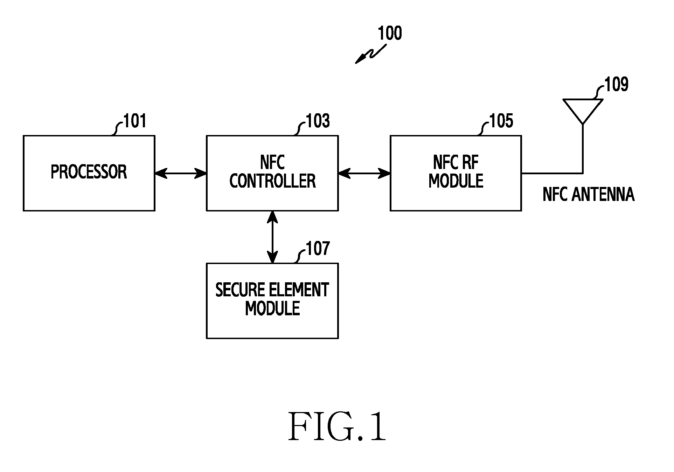

FIG. 1 depicts an electronic device for supporting a payment system using NFC according to an embodiment of the present disclosure.

Referring to FIG. 1, the electronic device 100 can include a processor 101, an NFC controller 103, an NFC radio frequency (RF) module 105, and a secure element module 107.

The processor 101 controls operations of the electronic device 100. The processor 101 can be a processor not supporting TEE or a processor supporting the TEE.

Mostly, an NFC module embedded in a current smart phone can be connected to a rich operating system (OS) such as Android and used as an interface for connecting a low-security OS (or (a chipset of) the rich OS, (a chipset of) an OS in a normal world) and a high-security OS (or (chipset of) the secure world).

The NFC controller 103 processes data based on the NFC. For example, the NFC controller 103 can operate in three communication modes including card emulation, reader/writer, and peer-to-peer (P2P) modes. The card emulation mode transmits the authentication information stored in the secure element module 107 to an external reader, and can be applied to a payment function, a transportation card, and a user authentication function for identification (ID) card. The reader mode can read external tag information. The P2P mode supports data exchange between devices and exchanges data such as electronic business card, contact information, digital photo, and uniform resource locator (URL).

The NFC RF module 105 can demodulate a signal received via an antenna 109 based on a corresponding demodulation scheme and provide the demodulated signal to the NFC controller 103, or modulate data fed from the NFC controller 103 based on a corresponding modulation scheme and transmit the modulated signal over the antenna 109.

The secure element module 107 stores transaction or authentication information. For example, the transaction or authentication information can include security information such as a primary account number (PAN), a token, and an encryption key. The PAN includes credit card information and indicates unique card numbers. The unique credit card number may not be encrypted. The token can replace the unique credit card number. The PAN or the token is used for an electronic payment, and the encryption key is used to encrypt data for payment authentication. The token and the PAN can be transmitted together with the encrypted data.

Only the NFC controller 103 can access the secure element module 107. The processor 101 may not be authorized to access the secure element module 107.

The NFC module of the electronic device can be connected to the OS of the normal world and serve as an interface for connecting the chipset of the normal world OS and the secure world. The high-level secure world can be accessed only through a controller of the NFC module.

The NFC controller 103, the NFC RF module 105, and the secure element module 107 can be implemented using a single chip or package. Hereafter, the single package including the NFC controller 103, the NFC RF module 105, and the secure element module 107 can be an NFC module. For example, the secure element module 107 can be included in the NFC controller 103 or the NFC RF module 105.

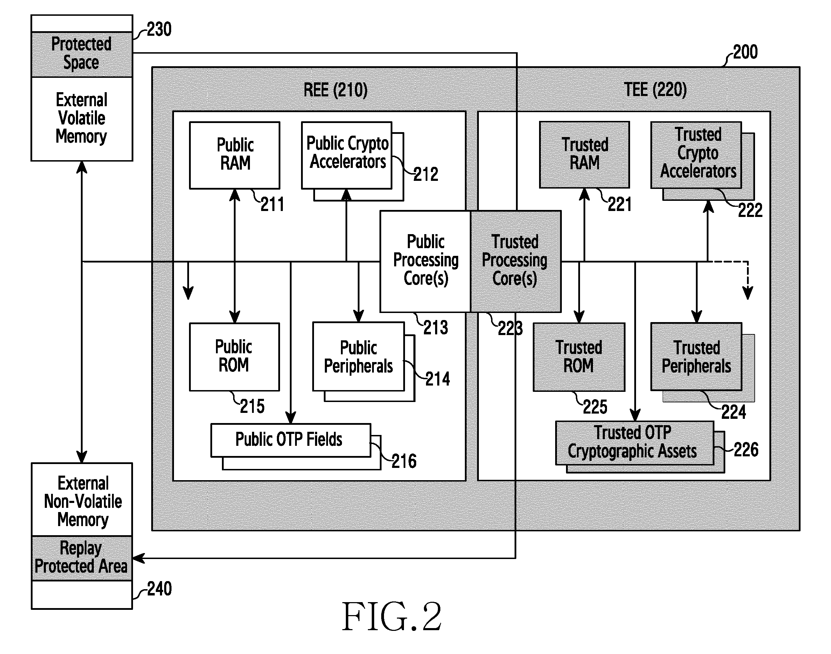

FIG. 2 depicts hardware architecture for providing rich execution environment (REE) and TEE according to an embodiment of the present disclosure.

To enhance the security, a processor 200 can be divided into the TEE 220 and the REE 210 in software and hardware.

For example, TrustZone of ARM can divide a processor core into two virtual cores. One of the two virtual cores can run in the normal world and the other can run in the secure world. The TrustZone provides hardware functionality for dividing the normal world and the secure world.

For example, the processor 200 in the REE can access a public random access memory (RAM) 211, public crypto accelerators 212, a public processing core 213, public peripherals 214, a public read only memory (ROM) 215, public one time password (OTP) fields 216, and external memories 230 and 240 via a bus.

Similarly, the processor 200 in the TEE can access a trusted RAM 221, trusted crypto accelerators 222, a trusted processing core 223, trusted peripherals 224, a trusted ROM 225, trusted OTP cryptographic assets 226, and the external memories 230 and 240 via the bus.

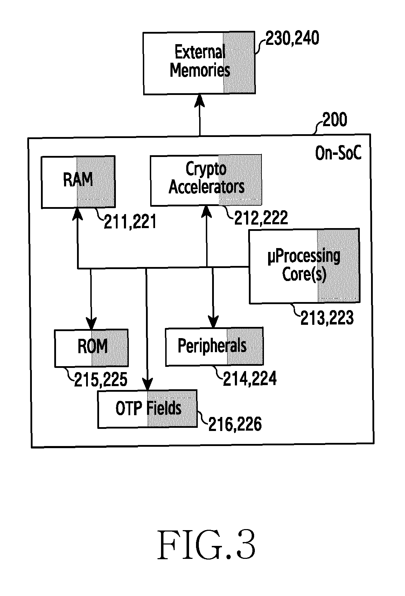

FIG. 3 illustrates hardware for providing REE and TEE according to an embodiment of the present disclosure.

The hardware function of the REE and the TEE can be shared in a timesliced fashion. For example, as shown in FIG. 3, the processor 200 can be divided in software without having to split the modules of the chipset into two hardware parts, like the TrustZone of ARM architectures. The processing core such as TrustZone is divided based on time and accessed in the normal world and the secure world. In the structure of FIG. 3, the secure world can process all security functions including the interfacing with a safe peripheral. The normal world can process non-security tasks.

The TEE 220 indicates a secure element (SE) in an electronic device such as smart phone. Sensitive data such as security data is stored, executed, and protected in a safe environment. The TEE 220 can run on a main device chipset based on a reliable hardware structure.

The rich OS is the OS of the smart phone, such as Android. Rich OS applications run on the rich OS. The security of secure applications, for example, digital rights management (DRM), banking application, payment application, and sensitive applications for processing business information are vulnerable on the normal rich OS. When an application is root-privileged in user's carelessness, a security bug of the OS or the application, malware, or jailbreaking, no applications are safe on the rich OS. Hence, the TEE 220 can be isolated from the rich OS environment in hardware. When accessing the sensitive information in the rich OS, the TEE 220 can be accessed only through an application programming interface (API) and a driver for accessing the TEE 220. The TEE 220 can provide data restricted in the secure world, to the rich OS. Since the TEE 220 sends the encrypted data which can be decrypted only by the TEE 220 of a server or a counterpart receiving the encrypted data, the rich OS cannot decrypt the corresponding data.

Even though the same processor as TrustZone of ARM is used in the timesliced fashion, when the processor operates in the secure world, the normal world cannot access the secure world. The REE 210 can access the TEE 220 only through the TEE API for accessing the TEE 220 and an REE/TEE communication agent (not shown) for hardware access.

A booting order of the OSs in the REE 210 and the TEE 220 can first execute TEE firmware to run the TEE OS, and the TEE firmware boots up the TEE OS. When the TEE booting is completed, firmware for the REE running is executed and the REE firmware boots up the REE OS. The REE 210 can access functions of the booted TEE OS.

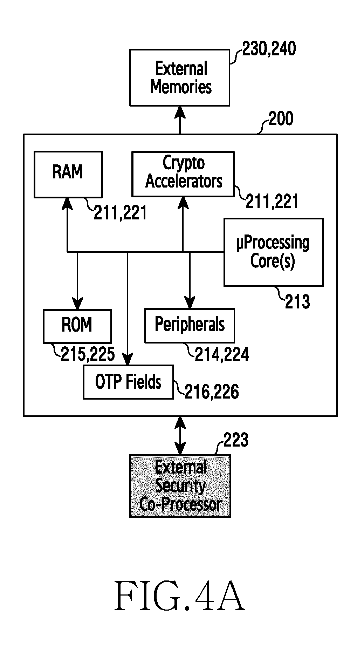

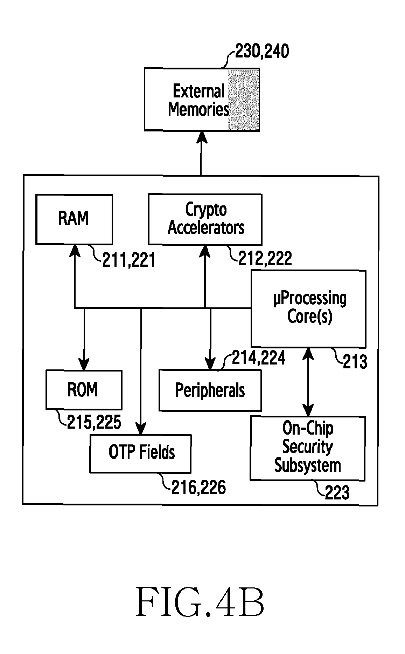

FIGS. 4A and 4B illustrate hardware for providing REE and TEE according to an embodiment of the present disclosure.

As shown in FIG. 4A, hardware for providing the REE 210 and the TEE 220 can separate a security processor, as a separate chip 223, from a chipset of a main processor 220.

As shown in FIG. 4B, hardware for providing the REE 210 and the TEE 220 can implement a security processor as a chip 223 operating as a separate core in a main processor. In FIG. 4B, the security processor and the main processor can access external memories 230 and 240 in different areas respectively.

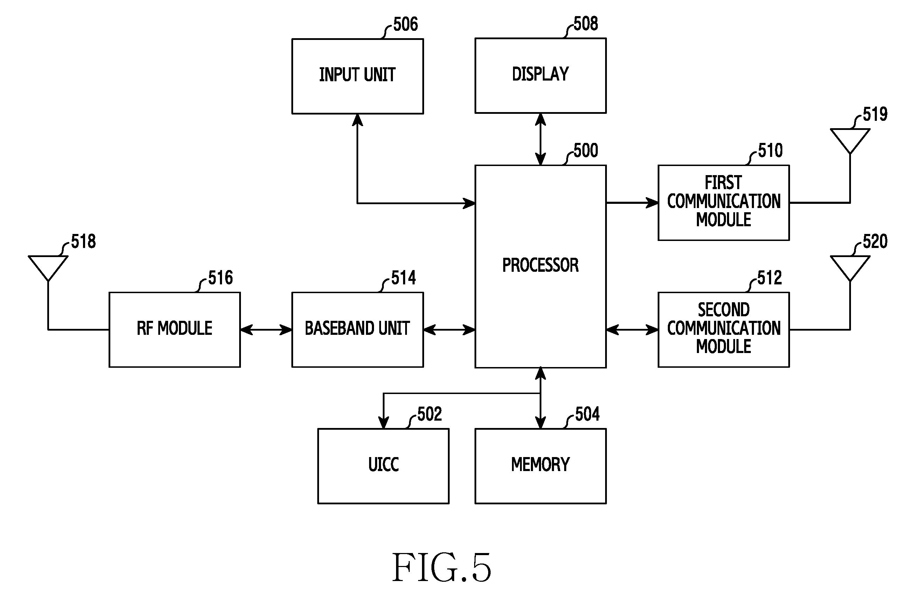

FIG. 5 is a block diagram of an electronic device according to an embodiment of the present disclosure.

Referring to FIG. 5, the electronic device can include a processor 500, a universal integrated circuit card (UICC) 502, a memory 504, an input unit 506, a display 508, a baseband unit 514, an RF module 516, a first communication module 510, and a second communication module 512.

The processor 500 processes operations of the electronic device. For example, the processor 500 can process and control voice communication and data communication, and further process a payment service function by running a payment application. The processor 500 can run in the REE/TEE. The TEE can store, execute, and product sensitive data such as authentication data in a safe environment. The REE can process data in a less secure environment than the TEE.

For example, when a user input is received to transmit the authentication information or the electronic device approaches or contacts a POS device reader, the processor 500 can detect a payment or authentication information transmission request. That is, the processor 500 can receive an authentication information transmission command through the user input (or a user interface), or an authentication information request from the POS device. In addition, the processor 500 can determine a communication method for transmitting the requested authentication information. For example, when the requested authentication information is related to a payment system based on the first communication module 510, the processor 500 can select the first communication module 510. When the requested authentication information is related to a payment system based on the second communication module 512, the processor 500 can select the second communication module 512.

The processor 500 can obtain authentication information corresponding to the authentication information transmission request from the secure element module which stores authentication information corresponding to communication methods. For example, the secure element module can store first authentication information used for the payment system based on the first communication module 510 and second authentication information_used for the payment system based on the second communication module 512.

The processor 500 can transmit the obtained authentication information through the first communication module 510 or the second communication module 512.

The secure element module can be implemented in various types. For example, the secure element module can be included in part or whole of the internal memory 504 or the UICC 502 of the electronic device. Alternatively, the secure element module can be implemented in the first communication module 510 or the second communication module 512.

The secure element module may be embedded as a chip separated from the electronic device. For example, the secure element module may be mounted on a small portable flash memory card (micro secure digital (SD)).

Alternatively, the secure element module may be combined with one other component of the processor 500 in a single package.

The processor 500 can access the secure world in the TEE and not access the secure world in the REE. Alternatively, although not in the TEE, only a particular module (e.g., second communication modules 705 and 905, and a first communication module 903) can access the secure world.

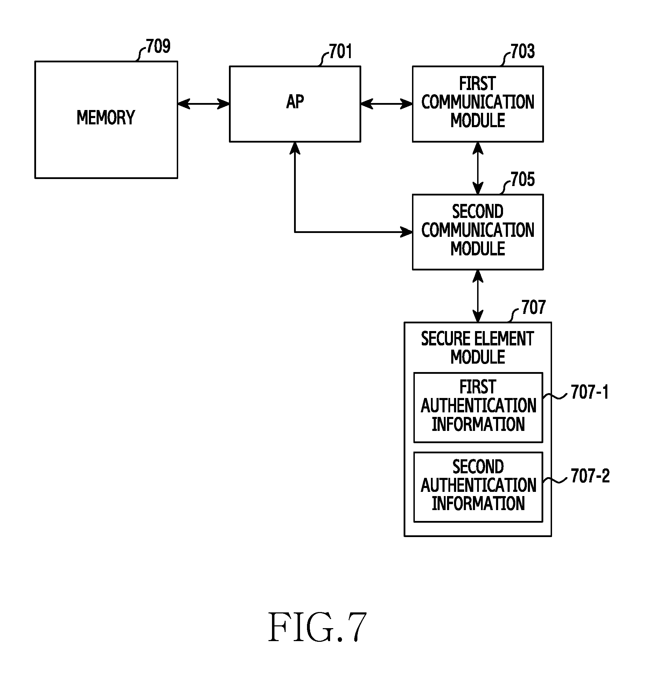

In response to the transaction or authentication information transmission request, at least one authentication information is obtained from at least one secure element module as shown in FIG. 7 through FIG. 23.

The processor 500 can process and transmit the at least one authentication information through at least one communication module (e.g., the first communication module 510, the second communication module 512). For example, the electronic device can generate encryption data using the encryption key of the transaction or authentication information such as PAN, token, and encryption key, and transmit the token of the transaction or authentication information and the generated encryption data through at least one of the first communication module 510 and the second communication module 512.

Hereafter, the typical processing and controlling of the processor 500 shall be omitted for brevity.

The memory 504 includes a program memory, a data memory, and a non-volatile memory. The program memory stores a program for controlling the operations of the electronic device. The program memory can employ a flash memory. The data memory temporarily stores data generating in the electronic device operation. The data memory can employ a RAM. The non-volatile memory stores system parameters and other storage data (phone numbers, short message service (SMS) messages, image data, etc.). The non-volatile memory can employ an electrically erasable programmable ROM (EEPROM). The memory 504 can be used as the secure world. The memory 504 can operate based on the REE/TEE. For example, the REE memory and the TEE memory can be implemented as separate hardware chips as shown in FIG. 3. The REE memory and the TEE memory can be used with different addresses in a single hardware chip. The memory 504 can store the authentication information. For example, when the authentication information is transmitted through the NFC communication module, the authentication information can be obtained from the memory 504 in a host card emulation mode. The authentication information can be obtained from the memory 504 in the near field magnetic stripe data transmission. The authentication information can be stored in at least one of the REE memory and the TEE memory.

The input unit 506 includes numeric keys 0 ∼ 9 and function keys such as menu, cancel (delete), OK, TALK, END, Internet access key, and navigation keys (up/down/left/right), and provides the processor 500 with key input data corresponding to a key pressed by the user. The display 508 displays status information and various moving and still pictures during the electronic device operation. The display 508 can employ a color liquid crystal display (LCD). The display 508 can provide and display an authentication result from the processor 500.

The RF module 506 down-converts an RF signal received via an antenna 518 based on the corresponding communication method, provides the down-converted signal to the baseband unit 514, up-converts a baseband signal from the baseband unit 514, and transmits the up-converted signal over the antenna 518. The baseband unit 514 processes the baseband signals transferred between the RF module 516 and the processor 500. For example, the corresponding communication method can include at least one of long term evolution (LTE), LTE-advanced (LTE-A), code division multiple access (CDMA), wideband CDMA (WCDMA), universal mobile telephone system (UMTS), global system for mobile communications (GSM), and 5th generation (5G) communication scheme.

The second communication module 512 can perform bidirectional communication (e.g., transmission and reception). The second communication module 512 can use the NFC for the bidirectional communication. The second communication module 512 can process and transmit second authentication information to the POS device over antenna 520.

The first communication module 510 can perform unidirectional communication (e.g., transmission). The first communication module 510 can use the near field magnetic stripe data transmission for the unidirectional communication. The first communication module 510 can process and transmit first authentication information to the POS device over antenna 519.

When the payment system is based on the bidirectional communication (e.g., the NFC communication module), for example, when the electronic device approaches or contacts the reader of the POS device, the second communication module 512 can directly receive the authentication information request from the POS device and transmit the second authentication information corresponding to the payment system based on the second communication module 512, to the POS device. By contrast, when the payment system is based on the unidirectional communication (e.g., the near field magnetic stripe data transmission), the first communication module 510, which cannot receive data from the POS data but only can transmit data to the POS device, can transmit the first authentication information corresponding to the payment system based on the first communication module 510, to the POS device according to an authentication information transmission command from the processor 500. The UICC 502 can be a card including a subscriber identity module and be inserted into a slot at a particular location of the electronic device. The UICC 502 can include unique identification information (e.g., integrated circuit card identifier (ICCID)) or subscriber information (e.g., international mobile subscriber identity (IMSI)).

In various implementations, the first communication module 510 or the second communication module 512 can be separated from the electronic device and connected through an audio jack (not shown) of the electronic device.

The first communication module 510 is not limited to the near field magnetic stripe data transmission, and can be replaced by a module for outputting a barcode, a quick response (QR) code, or audio data. For example, the display 508 for displaying the barcode or the QR code may replace the first communication module 510 as the unidirectional communication module. Alternatively, a speaker for outputting audio data may be used as the unidirectional communication module.

Likewise, the second communication module 512 can adopt various bidirectional communication methods instead of the NFC.

In various implementations, the first authentication information may be equal to the second authentication information.

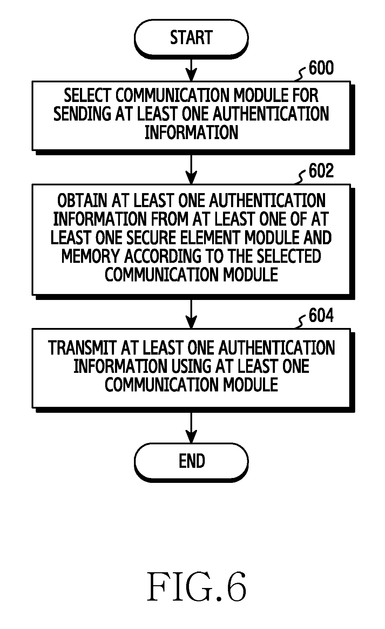

FIG. 6 is a flowchart of operations of an electronic device according to an embodiment of the present disclosure.

Referring to FIG. 6, the electronic device can select the communication module for sending at least one authentication information in operation 600. For example, when the user input is received for the authentication information transmission or the electronic device approaches or contacts the POS device reader, the electronic device can select the communication module for sending the corresponding authentication information.

For example, when receiving the user input for the authentication information transmission, the electronic device can select the first communication module 510. When the electronic device approaches or contacts the POS device reader, the electronic device can select the second communication module 512.

In various implementations, when a transaction for the authentication information transmission occurs (i.e., when the POS device supports the NFC and the near field magnetic stripe data transmission), the electronic device can select both of the first communication module 510 and the second communication module 512.

In operation 602, in response to the transmission request of the transaction or authentication information, the electronic device can obtain at least one authentication information from at least one of at least one secure element module and the memory. The authentication information can include at least one of the PAN, the token, and the key. For example, the token is digital data used in place of a user's credit card. When the corresponding credit card is registered, the token can be received from a server of a credit card company. The key can be periodically received from the credit card company or an authentication center server which distributes keys, or requested and received, if necessary, in at least one of the secure element module and the memory. The key can be used to generate the encryption data for authenticating the payment for the goods.

At least one authentication information obtained from at least one secure element (or secure world) shall be explained by referring to FIG. 7 through FIG. 23.

In operation 604, the electronic device can process and transmit the at least one authentication information through at least one communication module. For example, the electronic device can generate the encryption data using the authentication information key, and transmits the authentication information token and the generated encryption data. For example, the token and the encryption data generated with the key can be transmitted as a message. The token can be dynamic data. The key can be dynamic data.

Based on an authentication type, the token and/or the key of the authentication information can be classified. For example, a first token and a first key can be used for a first authentication type, and a second token and a second key can be used for a second authentication type. The first authentication type can be the payment system using the near field magnetic stripe data transmission, and the second authentication information can be the payment system using the NFC.

In various implementations, the first authentication information may be equal to the second authentication information.

FIG. 7 depicts interfacing between components of an electronic device according to an embodiment of the present disclosure.

Referring to FIG. 7, an application processor (AP) 701 can correspond to the processor 500 of FIG. 5, a first communication module 703 can correspond to the first communication module 510 of FIG. 5, and a second communication module 705 can correspond to the second communication module 512 of FIG. 5. The first communication module 703 and the second communication module 705 can be electrically connected to the AP 701, and a secure element module 707 can be electrically connected to the second communication module 705. The first communication module 703 and the second communication module 705 can be functionally connected.

The AP 701 can detect a first authentication service transaction and send a first authentication service transaction command to the first communication module 703. The first authentication service transaction command can direct to perform the authentication based on the first communication module 703. For example, the transaction can be generated by the user.

The AP 701 can receive an authentication result corresponding to second authentication information 707-2 from the second communication module 705 and control to display the authentication result on the display 508.

When receiving the authentication service transaction command from the AP 701, the first communication module 703 requests and receives first authentication information 707-1 from the second communication module 705. The first communication module 703 can process (e.g., generate the encryption data with the key and generate the token and the generated encryption data as a message) and transmit the first authentication information 707-1 to the POS device.

When the electronic device approaches or contacts the POS device, the second communication module 705 can detect a second authentication service transaction, obtain the second authentication information 707-2 from the secure element module 707, and process and transmit the second authentication information 707-2 to the POS device. The second communication module 705 can receive feedback of the authentication result and provide the result to the AP 701.

The secure element module 707 can be accessed only by the second communication module 705, and cannot be accessed by the AP 701 or the first communication module 703. The secure element module 707 can include the first authentication information 707-1 and the second authentication information 707-2.

At least one authentication information (e.g., the first authentication information 707-1) stored in the secure element module 707 can be stored in a normal memory 709 electrically connected to the AP 701. Herein, the normal memory 709 can be accessed by the AP 701 of the normal world.

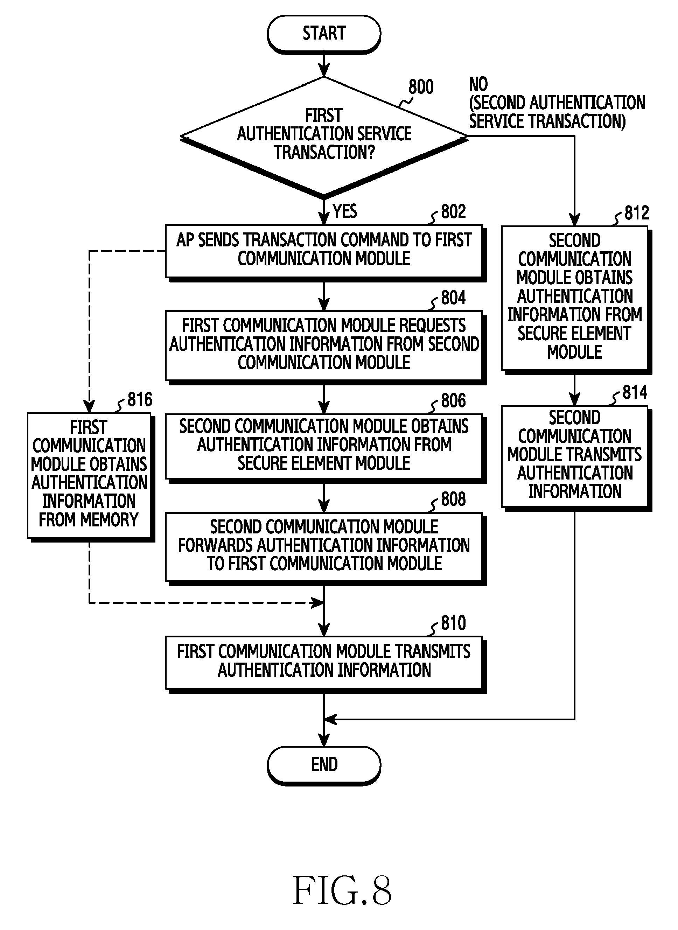

FIG. 8 is a flowchart of operations of an electronic device including a plurality of communication modules for an NFC mobile payment service according to an embodiment of the present disclosure.

Referring to FIG. 8, when a first authentication service transaction occurs in operation 800, the AP 701 can send a transaction command of the first authentication service to the first communication module 703 in operation 802.

In operation 804, the first communication module 703 can request the first authentication information for payment settlement from the second communication module 705.

In operation 806, the second communication module 705 can obtain the first authentication information for the payment settlement from the secure element module 807.

In operation 808, the second communication module 705 can forward the obtained first authentication information for the payment settlement to the first communication module 703.

In operation 810, the AP 701 can process and transmit the first authentication information through the first communication module 510.

After operation 802, the first communication module 703 can obtain the first authentication information from the memory 709 in operation 816. The obtained first authentication information can be transmitted in operation 810.

By contrast, when a second authentication service occurs in operation 800, the second communication module 705 can obtain the second authentication information for the payment settlement from the secure element module 707 in operation 812.

In operation 814, the second communication module 705 can process and transmit the second authentication information.

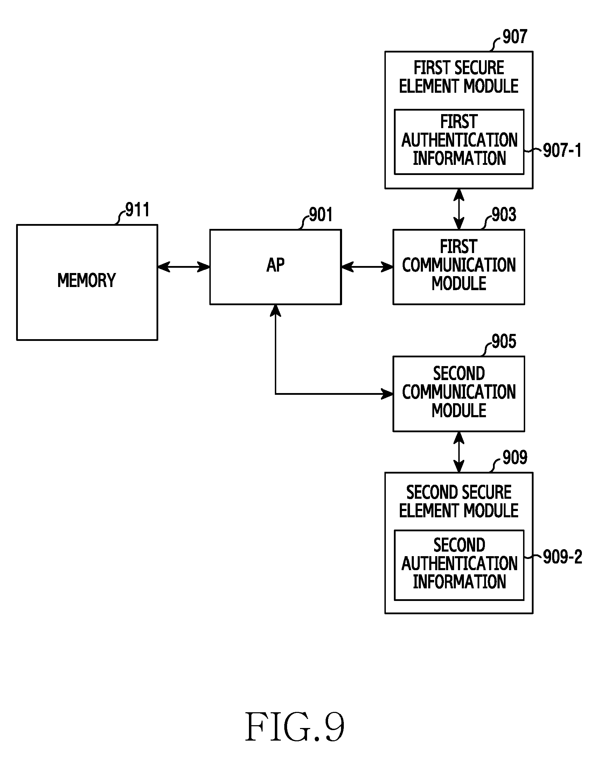

FIG. 9 depicts interfacing between components of an electronic device according to another embodiment of the present disclosure.

Referring to FIG. 9, an AP 901 can correspond to the processor 500 of FIG. 5, a first communication module 903 can correspond to the first communication module 510 of FIG. 5, and a second communication module 905 can correspond to the second communication module 512 of FIG. 5. The first communication module 903 and the second communication module 905 can be electrically connected to the AP 901, and a first secure element module 907 can be electrically connected to the first communication module 903. A second secure element module 909 can be electrically connected to the second communication module 905.

The AP 901 can detect a first authentication service transaction and send a first authentication service transaction command to the first communication module 903. The AP 901 can receive an authentication result corresponding to the second authentication information from the second communication module 905 and control to display the authentication result on the display 508.

When receiving the authentication service transaction command from the AP 901, the first communication module 903 can obtain first authentication information 907-1 from the first secure element module 907, and process and transmit the first authentication information 907-1 to the POS device.

When the electronic device approaches or contacts the POS device, the second communication module 905 can detect a second authentication service transaction, obtain the second authentication information 909-2 from the second secure element module 909, and process and transmit the second authentication information 909-2 to the POS device. The second communication module 905 can receive feedback of the authentication result and provide the result to the AP 901.

The first secure element module 907 can be accessed only by the first communication module 903, the second secure element module 909 can be accessed only by the second communication module 905, the AP 901 or the first communication module 903 cannot access the second secure element module 909, and the AP 901 or the second communication module 905 cannot access the first secure element module 907.

The first authentication information 907-1 can be stored in a normal memory 911 electrically connected to the AP 901. Herein, the normal memory 911 can be accessed by the AP 901 of the normal world.

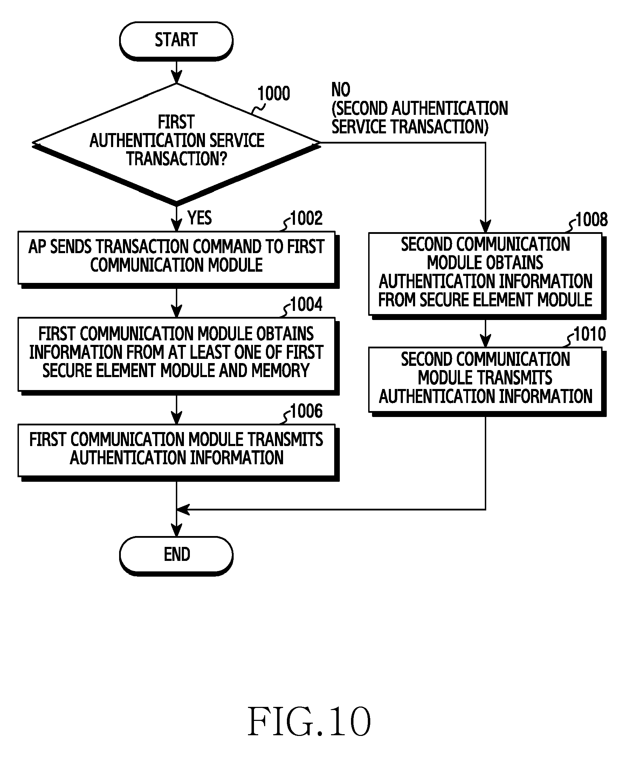

FIG. 10 is a flowchart of operations of an electronic device including a plurality of communication modules for an NFC mobile payment service according to another embodiment of the present disclosure.

Referring to FIG. 10, when a transaction of a first authentication service occurs in operation 1000, the AP 901 can send a transaction command of the first authentication service to the first communication module 903 in operation 1002.

In operation 1004, the first communication module 903 can obtain authentication information (e.g., the first authentication information) for the payment settlement from at least one of the first secure element module 907 and the memory 911.

In operation 1006, the AP 901 can process and transmit the authentication information through the first communication module 903.

By contrast, when a transaction of a second authentication service occurs in operation 1000, the second communication module 905 can obtain authentication information for the payment settlement from the second secure element module 909 in operation 1008.

In operation 1010, the AP 901 can process and transmit the authentication information.

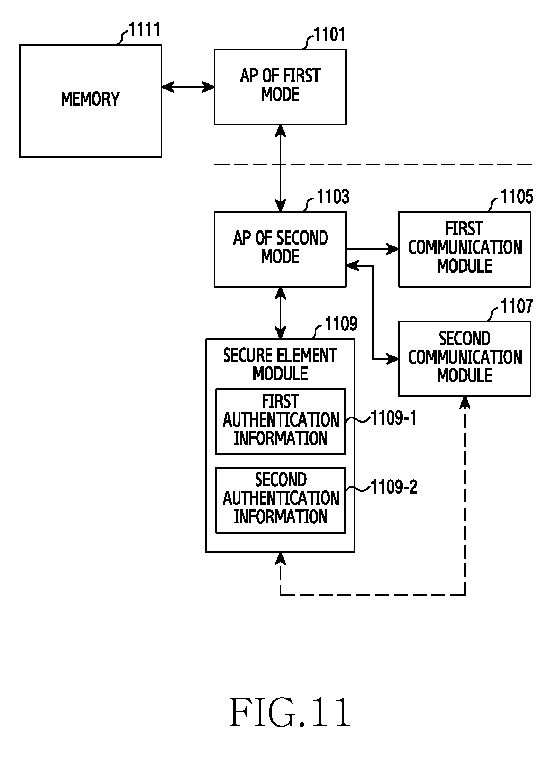

FIG. 11 depicts interfacing between components of an electronic device according to yet another embodiment of the present disclosure.

Referring to FIG. 11, an AP 1101 of a first mode and an AP 1103 of a second mode can correspond to the processor 500 of FIG. 5, a first communication module 1105 can correspond to the first communication module 510 of FIG. 5, and a second communication module 1107 can correspond to the second communication module 512 of FIG. 5. Herein, the AP 1101 of the first mode can be the processor 500 running in the normal world and the AP 1103 of the second mode can be the processor 500 running in the secure world. The AP 1101 of the first mode and the AP 1103 of the second mode can be a single processor or separate processors.

The first communication module 1105 and the second communication module 1107 can be electrically connected to the AP 1103 of the second mode, and a secure element module 1109 can be electrically connected to the second communication module 1107 or the AP 1103 of the second mode.

The AP 1101 of the first mode can execute and process a corresponding application in the normal world.

The AP 1103 of the second mode can execute and process secure applications (e.g., DRM, a payment application, an application for processing business information, and a banking application) in the secure world. All the secure functions including the interfacing with a safe peripheral is executed in the secure world. While the AP 1101 of the first mode and the AP 1103 of the second mode are separated in FIG. 11, they can be implemented using a single processor. The normal world and the secure world can run based on time sharing.

The AP 1101 of the first mode can detect a first authentication service transaction and send an authentication service transaction command to the AP 1103 of the second mode.

The AP 1103 of the second mode can send the authentication transaction command and first authentication information 1109-1 to the first communication module 1105. The AP 1103 of the second mode can access the secure element module 1109 and obtain the first authentication information 1109-1. The AP 1103 of the second mode can receive an authentication result corresponding to second authentication information 1109-2 from the second communication module 1107 and control to display the authentication result on the display 508.

In various implementations, when the second communication module 1107 requests the second authentication information 1109-2, the AP 1103 of the second mode can obtain and forward the second authentication information 1109-2 from the secure element module 1109 to the second communication module 1107.

When receiving the authentication service transaction command and the first authentication information 1109-1 from the AP 1103 of the second mode, the first communication module 1105 can process and transmit the first authentication information 1109-1 to the POS device.

When the electronic device approaches or contacts the POS device, the second communication module 1107 can detect a second authentication service transaction, obtain the second authentication information 1109-2 from the secure element module 1109, and process and transmit the second authentication information 1109-2 to the POS device. The second communication module 1105 can receive feedback of the authentication result and provide the result to the AP 1103 of the second mode.

In various implementations, when the electronic device approaches or contacts the POS device, the second communication module 1107 may request and receive the second authentication information 1109-2 from the AP 1103 of the second mode.

The secure element module 1109 can be accessed only by the second communication module 1107 or the AP 1103 of the second mode, and cannot be accessed by the AP 1101 of the first mode and the first communication module 1105. The secure element module 1109 can include the first authentication information 1109-1 for the near field magnetic stripe data transmission and the second authentication information 1109-2 for the NFC.

The first authentication information 1109-1 can be stored in a normal memory 1111 electrically connected to the AP 1101 of the first mode.

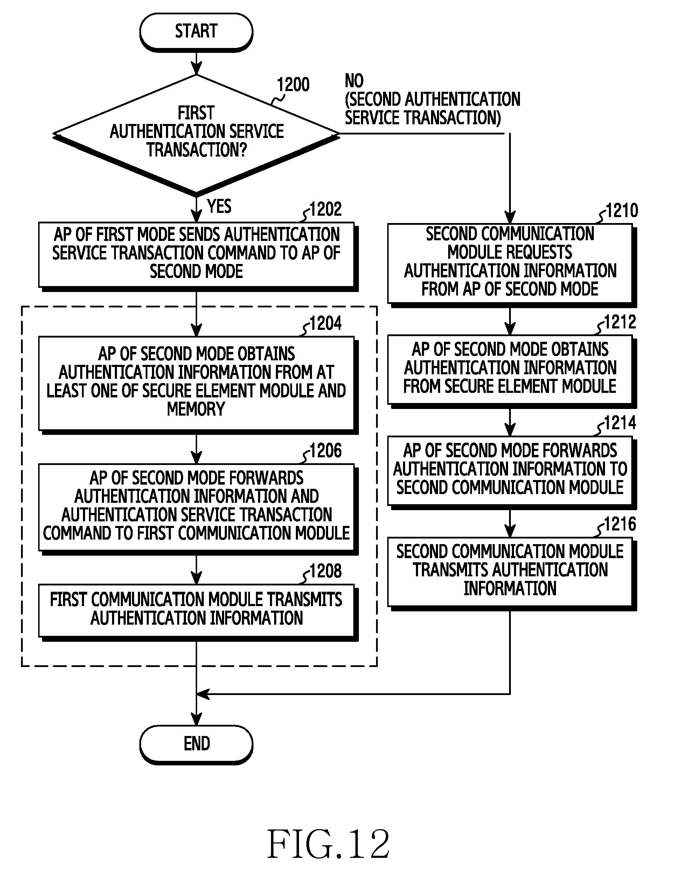

FIG. 12 is a flowchart of operations of an electronic device including a plurality of communication modules for a mobile short-range payment service according to another embodiment of the present disclosure.

Referring to FIG. 12, when a transaction of a first authentication service occurs in operation 1200, the AP 1101 of the first mode can send a transaction command of the first authentication service to the AP 1103 of the second mode in operation 1202.

In operation 1204, the AP 1103 of the second mode can obtain authentication information for the payment settlement from at least one of the secure element module 1109 and the memory 1111.

In operation 1206, the AP 1103 of the second mode can forward the obtained first authentication information for the payment settlement and the transaction command of the first authentication service to the first communication module 1105.

In operation 1208, the first communication module 1105 can process and transmit the authentication information.

By contrast, when a second authentication service transaction occurs in operation 1200, the second communication module 1107 can request authentication information for the payment settlement from the AP 1103 of the second mode in operation 1210.

In operation 1212, the AP 1103 of the second mode can obtain the authentication information for the payment settlement from the secure element module 1109.

In operation 1214, the AP 1103 of the second mode can forward the obtained authentication information for the payment settlement to the second communication module 1107.

In operation 1216, the second communication module 1107 can transmit the authentication information.

When the second authentication service transaction occurs in operation 1200, the second communication module 1107 may obtain and transmit the authentication information for the payment settlement directly from the secure element module 1109.

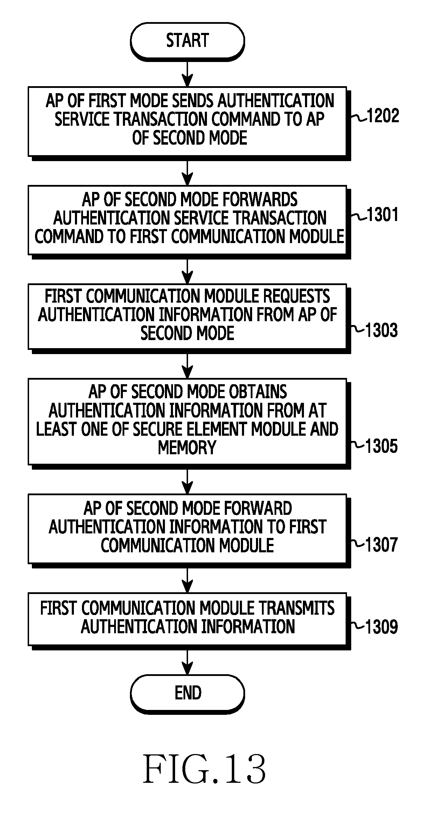

When the AP 1101 of the first mode sends the first authentication service transaction command to the AP 1103 of the second mode, the AP 1103 of the second mode may send the first authentication service transaction command to the first communication module 1105 and receive the request for the authentication information for the payment settlement from the first communication module 1105 as shown in FIG. 13, rather than obtaining the authentication information for the payment settlement directly from the secure element module 1109.

FIG. 13 is a flowchart of operations of an electronic device including a plurality of communication modules for a mobile short-range payment service according to another embodiment of the present disclosure.

Referring to FIG. 13, when the AP 1101 of the first mode sends the first authentication service transaction command to the AP 1103 of the second mode, the AP 1103 of the second mode can forward the first authentication service transaction command to the first communication module 1105 in operation 1301.

In operation 1303, the first communication module 1105 can request the authentication information for the payment settlement from the AP 1103 of the second mode.

In operation 1305, the AP 1103 of the second mode can obtain the authentication information for the payment settlement from at least one of the secure element module 1109 and the memory 1111.

In operation 1307, the AP 1103 of the second mode can forward the obtained authentication information for the payment settlement to the first communication module 1105.

In operation 1309, the first communication module 1105 can transmit the authentication information.

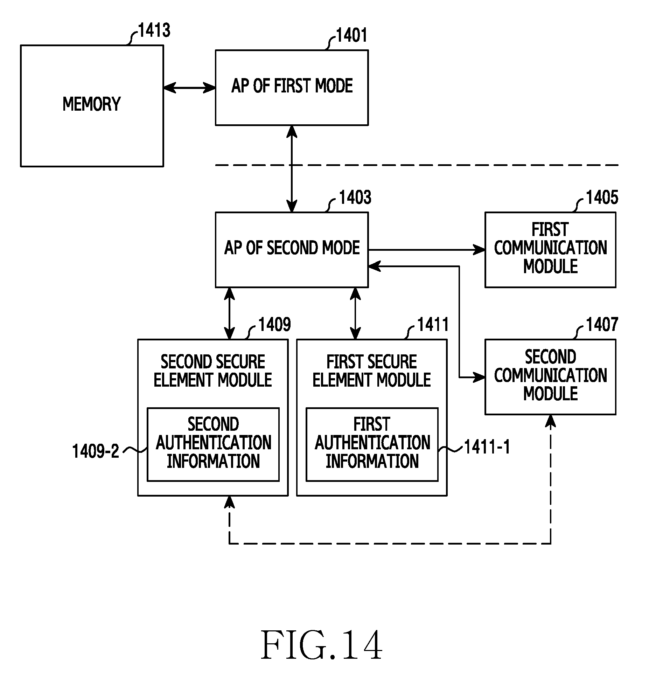

FIG. 14 depicts interfacing between components of an electronic device according to another embodiment of the present disclosure.

Referring to FIG. 14, an AP 1401 of a first mode and an AP 1403 of a second mode can correspond to the processor 500 of FIG. 5, a first communication module 1405 can correspond to the first communication module 510 of FIG. 5, and a second communication module 1407 can correspond to the second communication module 512 of FIG. 5. Herein, the AP 1401 of the first mode can be the processor running in the normal world and the AP 1403 of the second mode can be the processor running in the secure world.

The first communication module 1405 and the second communication module 1407 can be electrically connected to the AP 1403 of the second mode, and a second secure element module 1409 can be electrically connected to the second communication module 1407 or the AP 1403 of the second mode. A first secure element module 1411 can be electrically connected to the AP 1403 of the second mode.

The AP 1401 of the first mode can detect a first authentication service transaction and send an authentication service transaction command to the AP 1403 of the second mode.

The AP 1403 of the second mode can send the authentication transaction command and first authentication information 1411-1 to the first communication module 1405. The AP 1403 of the second mode can access the first secure element module 1411 and obtain the first authentication information 1411-1. The AP 1403 of the second mode can receive an authentication result corresponding to second authentication information 1409-2 from the second communication module 1407 and control to display the authentication result on the display 508.

In various implementations, when the second communication module 1407 requests the second authentication information 1409-2, the AP 1403 of the second mode can obtain and forward the second authentication information 1409-2 from the second secure element module 1409 to the second communication module 1407.

The first communication module 1405 can receive the authentication transaction command and the first authentication information 1411-1 from the AP 1403 of the second mode, and process and transmit the first authentication information 1411-1 to the POS device.

When the electronic device approaches or contacts the POS device, the second communication module 1407 can detect a second authentication service transaction, obtain the second authentication information 1409-2 from the second secure element module 1409, and process and transmit the obtained second authentication information 1409-2 to the POS device. The second communication module 1407 can receive feedback of the authentication result and provide the result to the AP 1403 of the second mode.

The first secure element module 1411 can be accessed only by the AP 1403 of the second mode, the second secure element module 1409 can be accessed only by the AP 1403 of the second mode and the second communication module 1407, the AP 1401 of the first mode or the first communication module 1405 cannot directly access the first secure element module 1411 and the second secure element module 1409, and the AP 1401 of the first mode or the second communication module 1407 cannot directly access the first secure element module 1411.

The first authentication information 1411-1 can be stored in a normal memory 1413 electrically connected to the AP 1401 of the first mode.

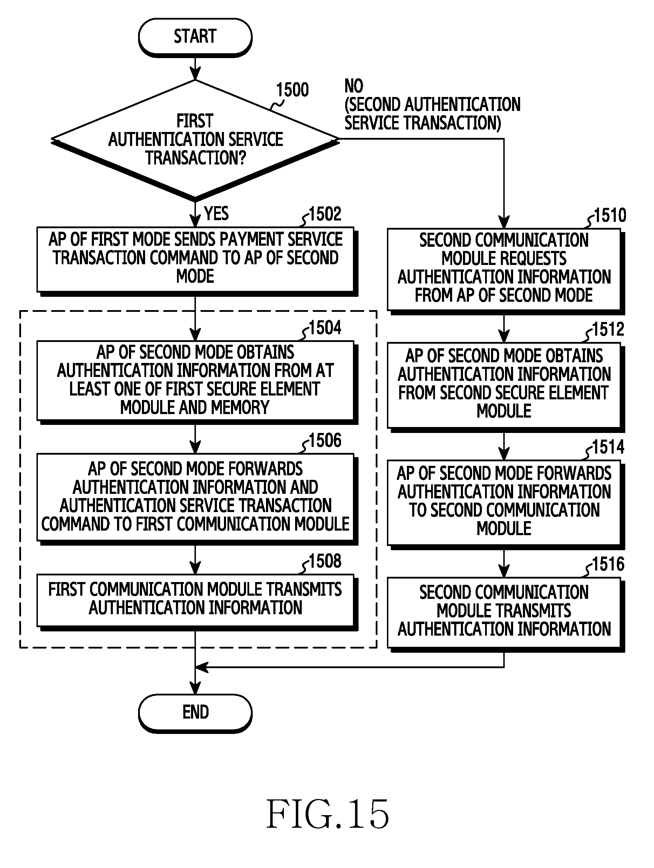

FIG. 15 is a flowchart of operations of an electronic device including a plurality of communication modules for a mobile short-range payment service according to another embodiment of the present disclosure.

Referring to FIG. 15, when a transaction of a first authentication service occurs in operation 1500, the AP 1401 of the first mode can send a transaction command of the first authentication service to the AP 1403 of the second mode in operation 1502.

In operation 1504, the AP 1403 of the second mode can obtain authentication information for payment settlement from at least one of the first secure element module 1411 and the memory 1413.

In operation 1506, the AP 1403 of the second mode can forward the obtained first authentication information for the payment settlement and the transaction command of the first authentication service to the first communication module 1405.

In operation 1508, the first communication module 1405 can transmit the authentication information.

By contrast, when a second authentication service transaction occurs in operation 1500, the second communication module 1407 can request authentication information for the payment settlement from the AP 1403 of the second mode in operation 1510.

In operation 1512, the AP 1403 of the second mode can obtain the authentication information for the payment settlement from the second secure element module 1409.

In operation 1514, the AP 1403 of the second mode can forward the obtained authentication information for the payment settlement to the second communication module 1407.

In operation 1516, the second communication module 1407 can transmit the authentication information.

When the second authentication service transaction occurs in operation 1500, the second communication module 1407 may obtain and transmit the authentication information for the payment settlement directly from the second secure element module 1409.

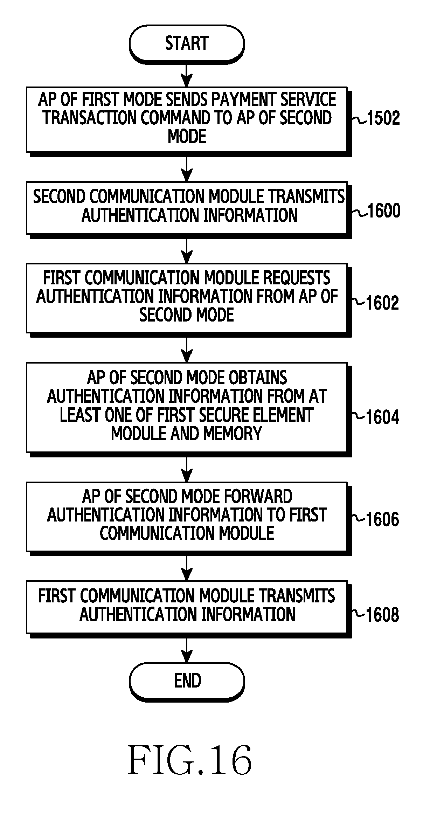

When the AP 1401 of the first mode sends the first authentication service transaction command to the AP 1403 of the second mode, the AP 1403 of the second mode may send the first authentication service transaction command to the first communication module 1405 and receive the request for the authentication information for the payment settlement from the first communication module 1405 as shown in FIG. 16, rather than directly obtaining the authentication information for the payment settlement directly from the first secure element module 1411.

FIG. 16 is a flowchart of operations of an electronic device including a plurality of communication modules for a mobile short-range payment service according to still another embodiment of the present disclosure.

Referring to FIG. 16, when the AP 1401 of the first mode sends the first authentication service transaction command to the AP 1403 of the second mode, the AP 1403 of the second mode can forward the first authentication service transaction command to the first communication module 1405 in operation 1600.

In operation 1602, the first communication module 1405 can request the authentication information for the payment settlement from the AP 1403 of the second mode.

In operation 1604, the AP 1403 of the second mode can obtain the authentication information for the payment settlement from at least one of the first secure element module 1411 and the memory 1413.

In operation 1606, the AP 1403 of the second mode can forward the obtained authentication information for the payment settlement to the first communication module 1405.

In operation 1608, the first communication module 1405 can transmit the authentication information.

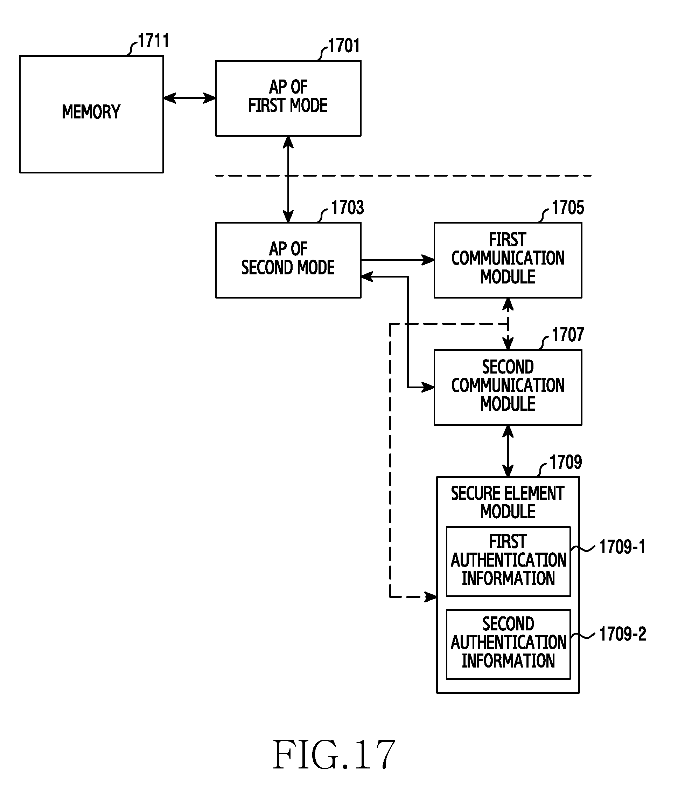

FIG. 17 depicts interfacing between components of an electronic device according to a further embodiment of the present disclosure.

Referring to FIG. 17, an AP 1701 of a first mode and an AP 1703 of a second mode can correspond to the processor 500 of FIG. 5, a first communication module 1705 can correspond to the first communication module 510 of FIG. 5, and a second communication module 1707 can correspond to the second communication module 512 of FIG. 5. Herein, the AP 1701 of the first mode can be the processor 500 running in the normal world and the AP 1703 of the second mode can be the processor 500 running in the secure world.

The first communication module 1705 and the second communication module 1707 can be electrically connected to the AP 1703 of the second mode, and a secure element module 1709 can be electrically connected to the second communication module 1707. The secure element module 1709 can be electrically connected to the first communication module 1703.

The AP 1701 of the first mode can detect an authentication service transaction and send a first authentication service transaction command to the AP 1703 of the second mode.

The AP 1703 of the second mode can forward the first authentication service transaction command and first authentication information 1709-1 to the first communication module 1705. The AP 1703 of the second mode can receive an authentication result corresponding to second authentication information 1709-2 from the second communication module 1707 and control to display the authentication result on the display 508.

When receiving the authentication service transaction command from the AP 1703 of the second mode, the first communication module 1705 can request and receive the first authentication information 1709-1 from the second communication module 1707.

In various implementations, when receiving the authentication service transaction command from the AP 1703 of the second mode, the first communication module 1705 may obtain the first authentication information 1709-1 directly from the secure element module 1709.

The first communication module 1705 can process and transmit the first authentication information 1709-1 to the POS device.

When receiving the first authentication information request from the first communication module 1705, the second communication module 1707 can obtain the first authentication information 1709-1 by accessing the secure element module 1709 and provide the obtained first authentication information 1709-1 to the first communication module 1705.

When the electronic device approaches or contacts the POS device, the second communication module 1707 can detect a second authentication service transaction, obtain the second authentication information 1709-2 by directly accessing the secure element module 1709, and process and transmit the second authentication information 1709-2 to the POS device. The second communication module 1707 can receive and forward authentication result feedback to the AP 1703 of the second mode.

The secure element module 1709 can be accessed only by the first communication module 705 or the second communication module 707, and cannot be accessed by the AP 1701 of the first mode and the AP 1703 of the second mode. The secure element module 1709 stores the first authentication information 1709-1 and the second authentication information 1709-2.

The first authentication information can be stored in a normal memory 1711 electrically connected to the AP 1701 of the first mode.

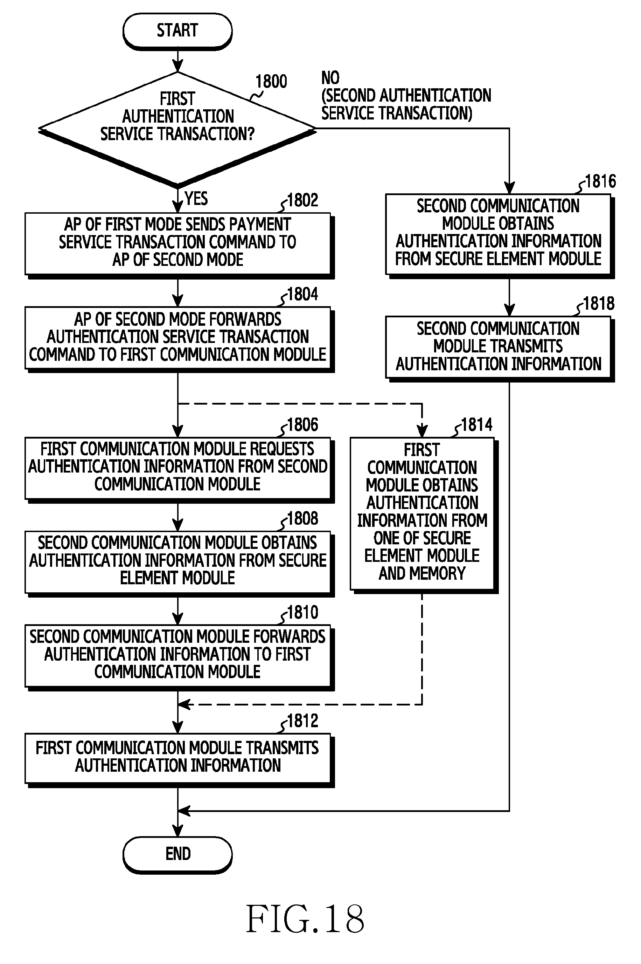

FIG. 18 is a flowchart of operations of an electronic device including a plurality of communication modules for a mobile short-range payment service according to a further embodiment of the present disclosure.

Referring to FIG. 18, when a transaction of a first authentication service occurs in operation 1800, the AP 1701 of the first mode can send a transaction command of the first authentication service to the AP 1703 of the second mode in operation 1802.

In operation 1804, the AP 1703 of the second mode can forward the first authentication service transaction command to the first communication module 1705.

In operation 1806, the first communication module 1705 can request first authentication information for payment settlement from the second communication module 1707.

In operation 1808, the second communication module 1707 can obtain authentication information (e.g., the first authentication information 1709-1) for the payment settlement from the secure element module 1709.

In operation 1810, the second communication module 1707 can forward the obtained first authentication information for the payment settlement to the first communication module 1705.

In various implementations, when the AP 1703 of the second mode sends the first authentication service transaction command to the first communication module 1705, the first communication module 1705 may directly obtain the first authentication information for the payment settlement from at least one of the secure element module 1709 and the memory 1711 in operation 1814.

In operation 1812, the first communication module 1705 can transmit the authentication information.

By contrast, when a second authentication service transaction occurs in operation 1800, the second communication module 1707 can obtain authentication information (e.g., the second authentication information 1709-2) for the payment settlement from the secure element module 1709 in operation 1816.

In operation 1818, the second communication module 1707 can transmit the authentication information.

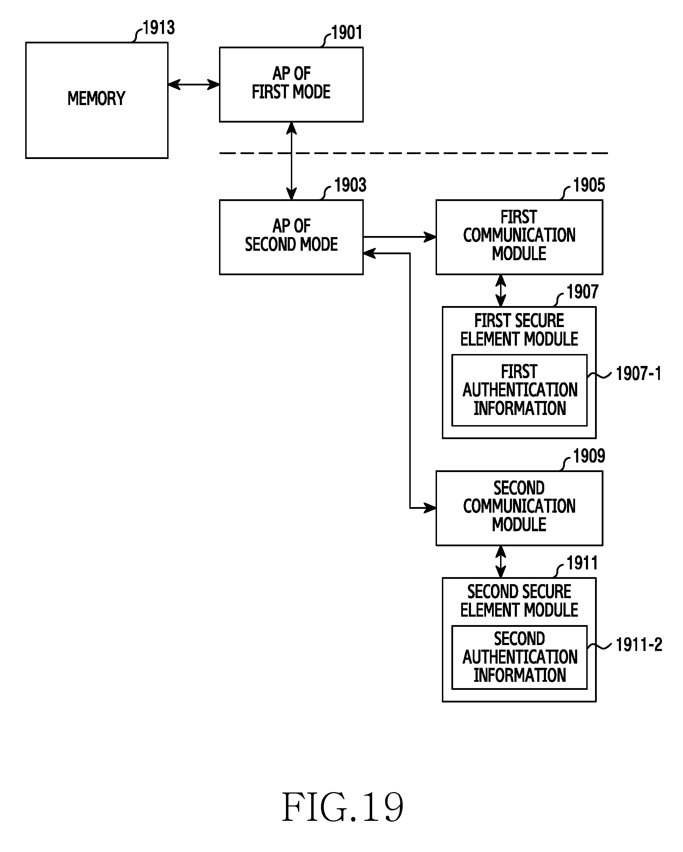

FIG. 19 depicts interfacing between components of an electronic device according to a further embodiment of the present disclosure. Referring to FIG. 19, an AP 1901 of a first mode and an AP 1903 of a second mode can correspond to the processor 500 of FIG. 5, a first communication module 1905 can correspond to the first communication module 510 of FIG. 5, and a second communication module 1909 can correspond to the second communication module 512 of FIG. 5. Herein, the AP 1901 of the first mode can be the processor 500 running in the normal world and the AP 1903 of the second mode can be the processor 500 running in the secure world.

The first communication module 1905 and the second communication module 1909 can be electrically connected to the AP 1903 of the second mode, and a second secure element module 1911 can be electrically connected to the second communication module 1909. The first secure element module 1907 can be electrically connected to the first communication module 1905.

The AP 1901 of the first mode can detect an authentication service transaction and send a first authentication service transaction command to the AP 1903 of the second mode.

The AP 1903 of the second mode can forward the first authentication service transaction command and first authentication information 1907-1 to the first communication module 1905. The AP 1903 of the second mode can receive an authentication result corresponding to the second authentication information 1911-2 from the second communication module 1909 and control to display the authentication result on the display 508.

When receiving the authentication service transaction command from the AP 1903 of the second mode, the first communication module 1905 can obtain the first authentication information 1907-1 by directly accessing the first secure element module 1907. The first communication module 1905 can process and transmit the obtained first authentication information 1907-1 to the POS device.

When the electronic device approaches or contacts the POS device, the second communication module 1909 can detect a second authentication service transaction, obtain the second authentication information 1911-2 by accessing the second secure element module 1911, and process and transmit the obtained second authentication information 1911-2 to the POS device. The second communication module 1909 can receive and forward authentication result feedback to the AP 1903 of the second mode.

The first secure element module 1907 can be accessed only by the first communication module 1905, the second secure element module 1911 can be accessed only by the second communication module 1909, and the AP 1901 of the first mode or the AP 1903 of the second mode cannot access the first secure element module 1907 and the second secure element module 1911.

The first authentication information can be stored in a normal memory 1913 electrically connected to the AP 1901 of the first mode.

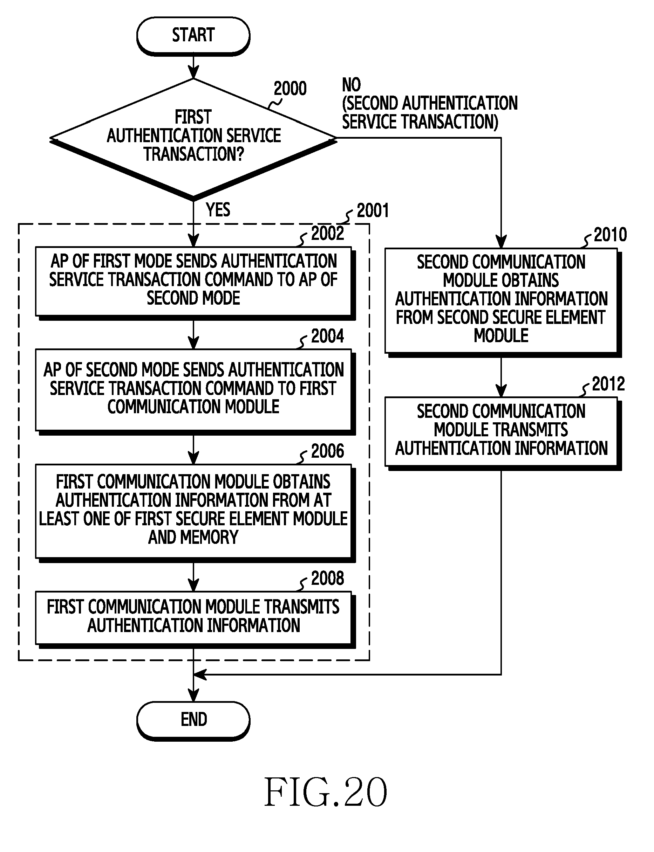

FIG. 20 is a flowchart of operations of an electronic device including a plurality of communication modules for a mobile short-range payment service according to a further embodiment of the present disclosure.

Referring to FIG. 20, when a transaction of a first authentication service occurs in operation 2000, the AP 1901 of the first mode can send a transaction command of the first authentication service to the AP 1903 of the second mode in operation 2002.

In operation 2004, the AP 1903 of the second mode can forward the first authentication service transaction command to the first communication module 1905.

In operation 2006, the first communication module 1905 can obtain authentication information for payment settlement from at least one of the first secure element module 1907 and the memory 1913.

In operation 2008, the first communication module 1905 can transmit the authentication information.

By contrast, when a second authentication service transaction occurs in operation 2000, the second communication module 1909 can obtain authentication information for the payment settlement from the second secure element module 1911 in operation 2010.

In operation 2012, the second communication module 1909 can transmit the authentication information.

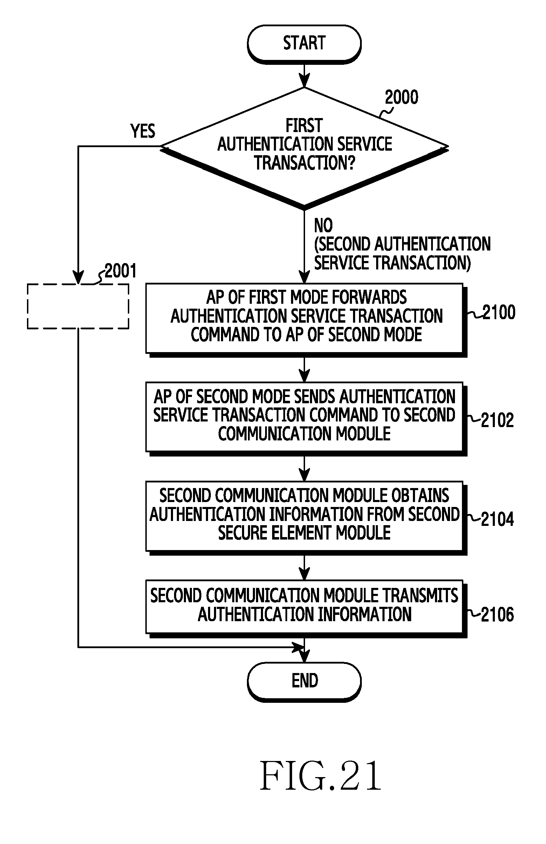

When the second authentication service transaction takes place in operation 2000, the payment may be settled as shown in FIG. 21.

FIG. 21 is a flowchart of operations of an electronic device including a plurality of communication modules for a mobile short-range payment service according to a further embodiment of the present disclosure.

Referring to FIG. 21, when the second authentication service transaction occurs, the AP 1901 of the first mode can forward the second authentication service transaction command to the AP 1903 of the second mode in operation 2100.

In operation 2102, the AP 1903 of the second mode can forward the second authentication service transaction command to the second communication module 1909.

In operation 2104, the second communication module 1909 can obtain the authentication information for the payment settlement from the second secure element module 1911.

In operation 2106, the second communication module 1909 can transmit the authentication information.

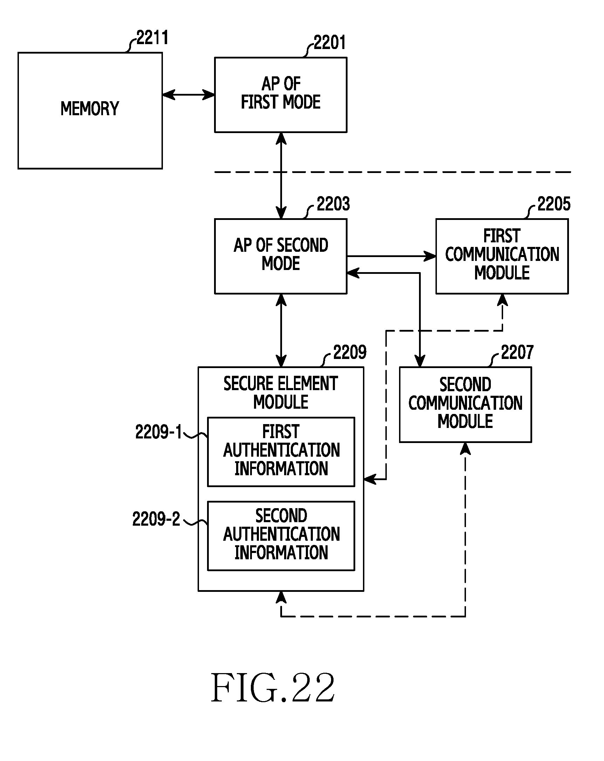

FIG. 22 depicts interfacing between components of an electronic device according to a further embodiment of the present disclosure.

Referring to FIG. 22, an AP 2201 of a first mode and an AP 2203 of a second mode can correspond to the processor 500 of FIG. 5, a first communication module 2205 can correspond to the first communication module 510 of FIG. 5, and a second communication module 2207 can correspond to the second communication module 512 of FIG. 5. Herein, the AP 2201 of the first mode can be the processor 500 running in the normal world and the AP 2203 of the second mode can be the processor 500 running in the secure world.

The first communication module 2205 and the second communication module 2207 can be electrically connected to the AP 2203 of the second mode, and a secure element module 2209 can be electrically connected to the second communication module 2207, the first communication module 2205, and the AP 2203 of the second mode.

The AP 2201 of the first mode can detect an authentication service transaction and send an authentication service transaction command to the AP 2203 of the second mode.

The AP 2203 of the second mode can forward a first authentication service transaction command to the first communication module 2205, and request the secure element module 2209 to send first authentication information 2209-1 to the first communication module 2205.

When a second authentication service transaction occurs, the AP 2203 of the second mode can request the secure element module 2209 to send second authentication information 2209-2 to the second communication module 2207.

The AP 2203 of the second mode can obtain the first authentication information 2209-1 by accessing the secure element module 2209. The AP 2203 of the second mode can receive an authentication result corresponding to the second authentication information 2209-2 from the second communication module 2207 and control to display it on the display 508.

The first communication module 2205 can receive the authentication service transaction command from the AP 2203 of the second mode and receive the first authentication information 2209-1 from the secure element module 2209. The first communication module 2205 can process and transmit the received first authentication information 2209-1 to the POS device.

When the electronic device approaches or contacts the POS device, the second communication module 2207 can detect a second authentication service transaction, obtain the second authentication information 2209-2 by directly accessing the secure element module 2209, and process and transmit the obtained second authentication information 2209-2 to the POS device. The second communication module 2207 can receive and forward authentication result feedback to the AP 2203 of the second mode.

When the electronic device approaches or contacts the POS device, the second communication module 2207 may request and receive the second authentication information 2209-2 from the AP 2203 of the second mode.

The secure element module 2209 can be accessed only by the AP 2201 of the second mode and the second communication module 2207 and cannot be accessed by the AP 2201 of the first mode. The first communication module 2205 can receive the first authentication information 2209-1 from the secure element module 2209 in one direction. The secure element module 2209 can contain the first authentication information 2209-1 and the second authentication information 2209-2.

The first authentication information can be stored in a normal memory 2211 electrically connected to the AP 2201 of the first mode.

The AP 2203 of the second mode can store the authentication information, for example, in the trusted RAM 221 of FIG. 2. The authentication information stored in the AP 2203 of the second mode can be transmitted through the first communication module 2205 and the second communication module 2207. For example, the AP 2203 of the second mode_can transmit one authentication information to a receiving device through the first communication module 2205 and the second communication module 2207.

The authentication information stored in the AP 2203 of the second mode can include the first authentication information transmitted through the first communication module 2205 and the second authentication information transmitted through the second communication module 2207. For example, the AP 2203 of the second mode can transmit to the receiving device the first authentication information through the first communication module 2205 and the second authentication information through the second communication module 2207. The AP 2203 of the second mode can transmit at least one of the stored authentication information to the receiving device. For example, the AP 2203 of the second mode can transmit the authentication information to the receiving device through the corresponding communication module.

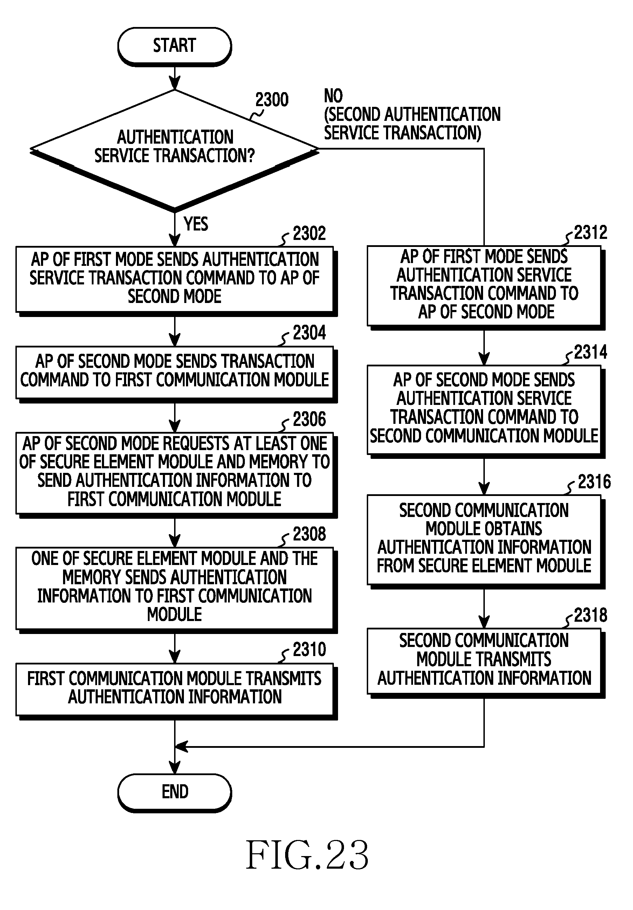

FIG. 23 is a flowchart of operations of an electronic device including a plurality of communication modules for a mobile short-range payment service according to a further embodiment of the present disclosure.

Referring to FIG. 23, when a transaction of a first authentication service occurs in operation 2300, the AP 2201 of the first mode can send a transaction command of the first authentication service to the AP 2203 of the second mode in operation 2302.

In operation 2304, the AP 2203 of the second mode can forward the first authentication service transaction command to the first communication module 2205.

In operation 2306, the AP 2203 of the second mode can request at least one of the secure element module 2209 and the memory 2211 to send the authentication information for the payment settlement to the first communication module 2205.

In operation 2308, at least one of the secure element module 2209 and the memory 2211 can send the authentication information for payment settlement to the first communication module 2205.

In operation 2310, the first communication module 2205 can transmit the authentication information received from the secure element module 2209.

By contrast, when a second authentication service transaction occurs in operation 2300, the AP 2201 of the first mode can send a transaction command of the second authentication service to the AP 2203 of the second mode in operation 2312.

In operation 2314, the AP 2203 of the second mode can forward the second authentication service transaction command to the second communication module 2207.

In operation 2316, the second communication module 2207 can request and obtain the authentication information for the payment settlement from the AP 2203 of the second mode.

In operation 2318, the second communication module 2207 can transmit the authentication information.

In FIG. 7 through FIG. 23, the first communication module can construct the communication module based on the near field magnetic stripe data transmission in the first communication module 510, and the second communication module or the secure world can construct the communication module based on the NFC in the second communication module 512.

An electronic device can include a first communication module for transmitting first authentication information corresponding to a user, to a first external receiving device, a second communication module for transmitting second authentication information corresponding to the user, to a second external receiving device, and one or more processors. The one or more processors can obtain the first authentication information or the second authentication information, transmit the authentication information to the first communication module when the obtained authentication information is the first authentication information, and transmit the authentication information to the second communication module when the obtained authentication information is the second authentication information.

The first receiving device and the second receiving device can construct the same electronic device.

The electronic device can further include a storage module for storing at least one of the first authentication information and the second authentication information.

The storage module can include one or more processors.

The first communication module can obtain the first authentication information through the second communication module.

The storage module can include a first storage module and a second storage module, the first communication module can obtain the first authentication information from the first storage module, and the second communication module can obtain the second authentication information from the second storage module.

In response to a payment request, the first communication module or the second communication module can transmit authentication information corresponding to the first authentication information or the second authentication information to a receiving device corresponding to the first receiving device or the second receiving device.

At least one of the first communication module and the second communication module can include a magnetic stripe data transmission (MST) device.

At least one of the first communication module and the second communication module can include an NFC device.

An electronic device can include a secure module for storing first authentication information and second authentication information, an NFC module for obtaining the first authentication information corresponding to a user from the secure module, and transmitting or receiving the first authentication information to and from a first external receiving device, and an MST module for obtaining the second authentication information corresponding to the user from the secure module and transmitting the second authentication information to a second external receiving device.

The MST module can obtain the second authentication information from the secure module through the NFC module.

An electronic device can include a first communication module for transmitting authentication information corresponding to a user, to a first external receiving device, a second communication module for transmitting the authentication information to a second external receiving device, and a processor electrically connected to the first communication module and the second communication module. The processor can obtain and transmit at least one authentication information stored, to the communication module and the second communication module.

The processor can obtain at least one authentication information stored in a storage module associated with a secure mode, or at least one authentication information encrypted and stored in a storage module associated with a normal mode.

An electronic device can include a first communication module for transmitting first authentication information corresponding to a user, to a first external receiving device, a second communication module for transmitting second authentication information corresponding to the user to a second external receiving device, a memory for storing the first authentication information and the second authentication information, and a processor electrically connected to the first communication module and the second communication module. In response to a payment request, the processor can transmit authentication information corresponding to the first authentication information or the second authentication information to the first communication module.

A method in an electronic device comprising a first communication module and a second communication module, can include obtaining at least one of first authentication information and second authentication information stored in the electronic device, when the at least one authentication information comprises the first authentication information, transmitting the first authentication information to a first external receiving device of the electronic device through the first communication module, and when the at least one authentication information comprises the second authentication information, transmitting the second authentication information to a second external receiving device through the second communication module.

The obtaining can include transmitting a request for the first authentication information from the first communication module to the second communication module, and obtaining the first communication module from the secure module through the second communication module.

The at least one authentication information can be obtained from the secure module through the at least one processor.

The first authentication information and the second authentication information can be transmitted at the same time.

The term "module" used in an embodiment of the present disclosure indicates, for example, a unit including a combination of one or more of hardware, software, or firmware. The "module" can be interchangeably used with the terms, for example, "a unit," "logic," "a logical block," "a component," or "a circuit." The "module" can be a minimum unit or part of the components integrally formed. The "module" may be a minimum unit or part of one or more functions. The "module" can be implemented mechanically or electronically. For example, the "module" can include at least one of an application-specific integrated circuit (ASIC), a field-programmable gate array (FPGA), or a programmable-logic device for performing operations which are well known or will be developed.

At least part of the device (e.g., the modules or the functions) or the method (e.g., the operations) described in the appended claims and/or the specifications of the present disclosure can be implemented using, for example, instructions stored as the programing module in a non-transitory computer-readable storage medium. For example, when an instruction is executed by one or more processors (e.g., the processor 120), the one or more processors perform the corresponding function. The non-transitory computer-readable storage medium can be, for example, the memory 130. At least part of the programming module can be implemented (e.g., executed) by the processor 120. At least part of the programming module can include, for example, a module, a program, sets of instructions, or a process for performing one or more functions.

The non-transitory computer-readable recording medium can include magnetic media such as a hard disk, a floppy disk and a magnetic tape, an optical media such as a compact disc read only memory (CD-ROM) and a digital versatile disc (DVD), magneto-optical media such as a floptical disk, and hardware devices specifically configured to store and execute an application instruction (e.g., the programming module) such as a ROM, a RAM, and a flash memory. A program instruction can include not only machine code made by a compiler but also high-level language code executable by a computer using an interpreter. The above-stated electronic device can serve as one or more software modules for fulfilling the operations of an embodiment of the present disclosure, and vice versa.

The module or the programming module according to an embodiment of the present disclosure can include at least one of the aforementioned components, omit some components, or further include other components. The operations fulfilled by the modules, the programming modules, or other components can be carried out in sequence, in parallel, repeatedly, or heuristically. In addition, some operations can be executed in a different order or omitted, or other operations can be added.

A computer-readable recording medium contains a program comprising instructions for, when executed by at least one processor, controlling the at least one processor to conduct at least one operation. The at least one operation includes selecting transmission for at least one of first authentication information and second authentication information according to an authentication service transaction, the first and second authentication stored in at least one secure element module; determining at least one of a first communication module corresponding to the first authentication information and a second communication module corresponding to the second authentication information based on the selection; providing corresponding authentication information to the at least one communication module determined; and transmitting the first authentication information through the first communication module or the second authentication information through the second communication module.

When the at least one secure element module is electrically connected to the second communication module and only the second communication module can access the at least one secure element module, the providing of the corresponding authentication information to the at least one communication module determined can include requesting, at the first communication module, the first authentication information from the second communication module according to the authentication service transaction command; and obtaining, at the second communication module, the first authentication information from the at least one secure element module and transmitting the first authentication information to the first communication module.

When the at least one secure element module is electrically connected to a processor and only the processor can access the at least one secure element module, the providing of the corresponding authentication information to the at least one communication module determined can include obtaining, at the processor, the first authentication information from the at least one secure element module; and sending the first authentication information to the first communication module.

When the first secure element module is electrically connected to the first communication module, only the first communication module can access the first secure element module, the second secure element module is electrically connected to the second communication module, and only the second communication module can access the second secure element module, the providing of the corresponding authentication information to the at least one communication module determined can include obtaining, at the first communication module, the first authentication information from the first secure element module according to the authentication service transaction command.

When the at least one secure element module is electrically connected to a processor and the first communication module, only the processor can access the at least one secure element module, and the at least one secure element module can transmit data to the first communication module according to a command of the processor, the providing of the corresponding authentication information to the at least one communication module determined can include requesting, at the processor, the at least one secure element module to send first authentication information to the first communication module; and transmitting, at the at least secure element module, the first authentication information to the first communication module.

The providing of the corresponding authentication information to the at least one communication module determined can be performed in a TEE.

The first authentication information and the second authentication information can be transmitted in sequence or substantially concurrently.

The first communication module can use near field magnetic stripe data transmission, and the second communication module can use NFC.

The at least one secure element module can be implemented using one of an embedded secure element, micro SD, and UICC.

As set forth above, the interface for associating the payment system based on the near field magnetic stripe data transmission and the payment system based on the NFC can provide the mobile payment service based on various communication methods.

Further, the payment system based on the near field magnetic stripe data transmission uses the secure world of a higher security level than the memory and thus provides a safer wireless payment environment.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method in an electronic device comprising a first communication module and a second communication module, the method comprising:
obtaining at least one of first authentication information or second authentication information stored in the electronic device,
transmitting, when the obtained authentication information comprises the first authentication information, the authentication information to a first external receiving device through the first communication module, and
transmitting, when the obtained authentication information comprises the second authentication information, the authentication information to a second external receiving device through the second communication module.

2. The method of claim 1, wherein the first external receiving device and the second external receiving device are parts of a same electronic device.

3. The method of claim 1, further comprising:
storing at least one of the first authentication information and the second authentication information in a storage module of the electronic device.

4. The method of claim 1, wherein the first authentication information is obtained through the second communication module.

5. The method of claim 3, further comprising:
controlling the first communication module to obtain the first authentication information from a first storage module of the storage module, and
controlling the second communication module to obtain the second authentication information from a second storage module of the storage module.

6. The method of claim 1, wherein at least one of the first communication module and the second communication module comprises a magnetic stripe data transmission (MST) device or a near field communication(NFC) device.

7. The method of claim 1, wherein the electronic device is configured to operate in at least one of a normal operation mode and a secure operation mode,
wherein the processor in the secure operation mode is enabled to access a function,
wherein the processor in the normal operation mode is not enabled to access the function.

8. The method of claim 7, wherein the storage module is accessible when the electronic device operates in the secure operation mode.

9. The method of claim 1, wherein the first authentication information equals the second authentication information.

10. The method of claim 1, wherein the first authentication information and the second authentication information include at least one of token and security information.

11. The method of claim 1, further comprising,
transmitting authentication information corresponding to at least one of the first authentication information and the second authentication information to the first communication module.

12. The method of claim 1, further comprising,
transmitting authentication information corresponding to at least one of the first authentication information and the second authentication information to at least one of the first communication module and the second communication module.

13. The method of claim 1, further comprising,
transmitting the first authentication information to a first external receiving device by a near field communication(NFC) module, and
transmitting the second authentication information to a second external receiving device by a magnetic stripe data transmission(MST).

14. An electronic device, comprising;
one or more processors;
memory and
one or more programs, wherein the one or more programs are stored in the memory and configured to cause, when executed by the electronic device, the electronic device to perform the method of any one of claims 1 to 13.
